# EUROPEAN PATENT APPLICATION

(11) **EP 4 521 756 A1**
(43) Date of publication of application: **12.03.2025**
(21) Application number: 23910172.8
(22) Date of filing: 14.12.2023
(51) Int. Cl.: H04N 21/431, H04L 65/403, G06F 9/451

(54) **CONFERENCE PAGE DISPLAY METHOD AND APPARATUS, ELECTRONIC DEVICE, AND STORAGE MEDIUM**

(30) Priority: 28.12.2022 CN 202211701831
(71) Applicant: Beijing Zitiao Network Technology Co., Ltd., Beijing 100190 (CN)
(72) Inventor: XUE, Wensheng, Beijing 100028 (CN); ZOU, Bo, Beijing 100028 (CN); JIA, Yangyang, Beijing 100028 (CN); LIU, Bin, Beijing 100028 (CN); HU, Zhangbing, Beijing 100028 (CN)
(74) Representative: Williams, Michael David
(86) International application number: PCT/CN2023/138724
(87) International publication number: WO 2024/140242

(57) **Abstract**

Embodiments of the present disclosure provide a conference page display method and apparatus, an electronic device, and a storage medium. The method comprises : receiving a page display operation of a current user for a target conference, the target conference comprising at least two conference groups, and the current user being in one of the conference groups of the target conference; and in response to the page display operation, displaying a conference page of the target conference, and displaying communication information of the target conference in the conference page, the communication information being sent by participants in the target conference, and the communication information being visible to the participants in the at least two conference groups. According to the embodiments of the present disclosure, the communication mode of the participants in group discussion can be enriched.

## Description

This application claims priority to Chinese Patent Application No. 202211701831.2, filed on December 28, 2022, the entire disclosure of which is incorporated herein by reference as part of the present disclosure.

### TECHNICAL FIELD

The present disclosure relates to a conference page display method and an apparatus, an electronic device, and a storage medium.

### BACKGROUND

At present, in some Applications, participants of a video conference can have a group discussion. However, in some cases, the communication manner for participants during a group discussion is very limited.

### SUMMARY

The present disclosure relates to a conference page display method and an apparatus, an electronic device, and a storage medium, to enrich the communication manner for participants during a group discussion.

On the first aspect, the embodiments of the present disclosure provide a conference page display method comprising: receiving a page display operation of a current user for a target conference, wherein the target conference comprises at least two conference groups, and the current user is in one conference group of the target conference; and in response to the page display operation, displaying a conference page of the target conference, and showing communication information of the target conference in the conference page, wherein the communication information is sent by a participant of the target conference; and the communication information is visible to each participant in the at least two conference groups.

On the second aspect, the embodiments of the present disclosure provide a conference page display apparatus, comprising: an operation receiving module configured to receive a page display operation of a current user for a target conference, wherein the target conference comprises at least two conference groups, and the current user is in one conference group of the target conference; and a page display module configured to, in response to the page display operation, display a conference page of the target conference, and show communication information of the target conference in the conference page, wherein the communication information is sent by a participant of the target conference; and the communication information is visible to each participant in the at least two conference groups.

On the third aspect, embodiments of the present disclosure further provide an electronic device, comprising: one or more processors; and a memory for storing one or more computer programs which, when executed by the one or more processors, enable the one or more processors to perform the conference page display provided by the embodiments of the present disclosure.

On the fourth aspect, embodiments of the present disclosure further provide a computer-readable storage medium, storing computer instructions which, when executed by a processor, implement the conference page display method provided by the embodiments of the present disclosure.

### BRIEF DESCRIPTION OF DRAWINGS

The above and other features, advantages and aspects of different embodiments of the present disclosure will become more apparent from the accompanying drawings and the following specific embodiments. Identical or similar reference numerals indicate identical or similar elements throughout the drawings. It will be understood that the drawings are illustrative, and components and elements are not necessarily drawn to scale.
Fig. 1 is a flowchart of a conference page display method provided by an embodiment of the present disclosure;
Fig. 2 is a schematic diagram of displaying a conference page provided by an embodiment of the present disclosure;
Fig. 3 is a flowchart of another conference page display method provided by an embodiment of the present disclosure;
Fig. 4 is a structural block diagram of a conference page display apparatus provided by an embodiment of the present disclosure; and
Fig. 5 is a structural schematic diagram of an electronic device provided by an embodiment of the present disclosure.

### DETAILED DESCRIPTION

Embodiments of the present disclosure are described in more detail below with reference to the drawings. Although certain embodiments of the present disclosure are shown in the drawings, it should be understood that the present disclosure may be achieved in various forms and should not be construed as being limited to the embodiments described here. On the contrary, these embodiments are provided to understand the present disclosure more clearly and completely. It should be understood that the drawings and the embodiments of the present disclosure are only for exemplary purposes and are not intended to limit the scope of protection of the present disclosure.

It should be understood that various steps recorded in the implementation modes of the method of the present disclosure may be performed according to different orders and/or performed in parallel. In addition, the implementation modes of the method may include additional steps and/or steps omitted or unshown. The scope of the present disclosure is not limited in this aspect.

The term "including" and variations thereof used in this article are open-ended inclusion, namely "including but not limited to". The term "based on" refers to "at least partially based on". The term "one embodiment" means "at least one embodiment"; the term "another embodiment" means "at least one other embodiment"; and the term "some embodiments" means "at least some embodiments". Relevant definitions of other terms may be given in the description hereinafter.

It should be noted that concepts such as "first" and "second" mentioned in the present disclosure are only used to distinguish different apparatuses, modules or units, and are not intended to limit orders or interdependence relationships of functions performed by these apparatuses, modules or units.

It should be noted that modifications of "one" and "more" mentioned in the present disclosure are schematic rather than restrictive, and those skilled in the art should understand that unless otherwise explicitly stated in the context, it should be understood as "one or more".

Names of messages or information exchanged between a plurality of apparatuses in embodiments of the present disclosure are only used for the purpose of description and not meant to limit the scope of these messages or information.

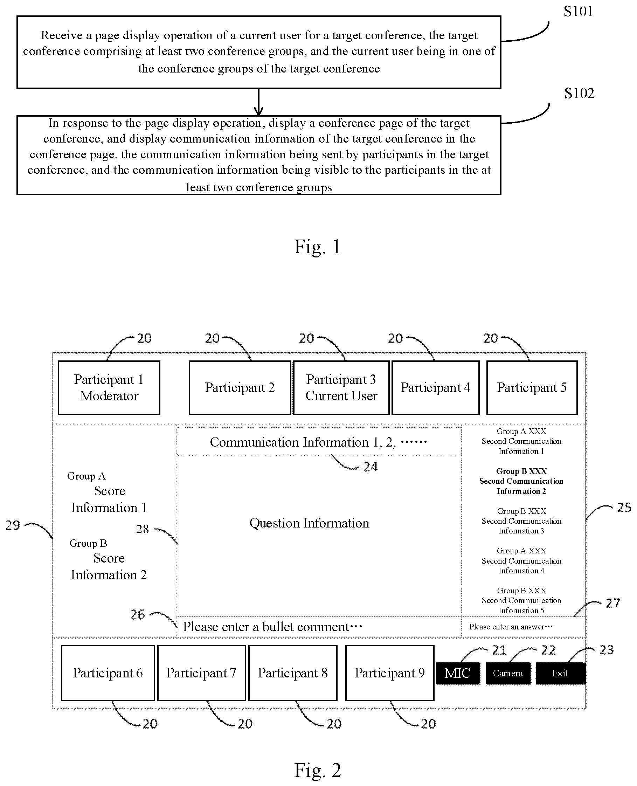

Fig. 1 is a flowchart of a conference page display method provided by an embodiment of the present disclosure. The method may be performed by a conference page display apparatus that may be implemented by software and/or hardware and may be configured in an electronic device, e.g., configured in a computer, a mobile phone, or a tablet computer. The conference page display method provided by the embodiment of the present disclosure is applicable to a scenario of communication during group discussions in a conference. As shown in Fig. 1, the conference page display method provided by the embodiment may include the following steps.

At S101, a page display operation of a current user for a target conference is received, wherein the target conference includes at least two conference groups, and the current user is in one conference group of the target conference.

The page display operation may be a triggering operation indicative of displaying the conference page. Exemplarily, the page display operation may be a triggering operation indicative of switching from other pages to the conference page, such as a triggering operation of switching the conference page from a minimized state to a normal display state or a full screen display state, or a triggering operation indicative of joining the target conference. The current user may be regarded as a user who performs the above-mentioned page display operation.

The target conference may be a conference corresponding to the conference page, which may be a conference that the current user participates in. The conference may be a video conference or a voice conference. The target conference may include at least two conference groups, and the current user is in one conference group of the target conference. A voice signal of a participant in a certain conference group can only be listened by the participants within the conference group. In other words, each participant can only hear the voice signals of the participants within the corresponding conference group and cannot hear voice signals of participants within other conference groups.

In this embodiment, when the current user wants to view the conference page of the target conference, the current user can perform the page display operation for the target conference. Correspondingly, a current electronic device can receive the page display operation performed by the current user.

At S102, in response to the page display operation, a conference page of the target conference is displayed, and communication information of the target conference is shown in the conference page, wherein the communication information is sent by a participant of the target conference, and the communication information is visible to each participant in the at least two conference groups.

The communication information may be information for communication, which may be sent by the participants of the target conference, e.g., sent by any participant in each conference group. The communication information may include text, emojis, and/or pictures, etc. Exemplarily, the communication information may include first communication information and/or second communication information. The communication information is visible to each participant in each conference group of the target conference.

Specifically, upon receiving the page display operation of the current user for the target conference, the conference page of the target conference may be displayed, and the communication information sent by the participants of the target conference is shown in the conference page, as shown in Fig. 2.

In this embodiment, when the current user is in a certain conference group of the target conference, the voice signals of the participants in the conference group can also be played in real time. For example, irrespective of the conference page of the target conference being in a display state, when the current user is in a certain conference group of the target conference, the voice signals of the participants in the conference group are played. Alternatively, considering whether the conference page of the target conference is in the display state, the voice signals of the participants in the conference group are played only when the conference page is in the display state, and when the conference page is not in the display state, the voice signals of the participants in the conference group are not played. In this case, optionally, the conference page display method provided in this embodiment may further include: playing a voice signal of a first participant, wherein the first participant and the current user are in a same conference group. The first participant may be a participant in the target conference who is in the same conference group with the current user, i.e., other participants than the current user in the conference group to which the current user belongs.

Moreover, as shown in Fig. 2 (which shows two conference groups with a moderator not in any one conference group as an example), the conference page may further display related information 20 of each participant, e.g., information such as a video picture, an avatar and/or a nickname of each participant. The related information of the participants in different conference groups may be displayed in different regions of the conference page. The moderator of the target conference may be in a certain conference group of the target conference or outside the conference groups of the target conference.

As shown in Fig. 2, the conference page may further display a microphone control 21, a camera control 22 and/or a leave conference control 23. Thus, the current user can trigger the microphone control 21 to turn on or off a microphone of a current electronic device used by the current user to participate in the conference, trigger the camera control 22 to turn on or off a camera of the current electronic device used by the current user to participate in the conference, and/or trigger the leave conference control 23 to leave the target conference.

When the microphone of the current electronic device is in an on state, the current electronic device can acquire the voice signal of the current user by the microphone, and correspondingly, the participants in the conference group to which the current user belongs are able to listen to the voice signal of the current user. When the microphone of the current electronic device is in an off state, the current electronic device does not acquire the voice signal of the current user by the microphone, and correspondingly, the participants in the conference group to which the current user belongs cannot listen to the voice signal of the current user. When the microphone of the current electronic device is in the on state, the current electronic device can acquire the video picture of the current user by the camera, and correspondingly, the participants (including the current user) in the target conference can watch the video picture of the current user through the conference page of the target conference. When the microphone of the current electronic device is in the off state, the current electronic device does not acquire the video picture of the current user by the camera, and correspondingly, the participants of the target conference cannot watch the video picture of the current user.

The conference page display method provided in this embodiment includes: receiving the page display operation of the current user for the target conference, wherein the target conference includes at least two conference groups, and the current user is in one conference group of the target conference; and in response to the page display operation, displaying the conference page of the target conference, and showing the communication information of the target conference in the conference page, wherein the communication information is sent by a participant of the target conference; and the communication information is visible to each participant in the at least two conference groups. With the above technical solution of this embodiment, the communication information sent by the participants in different conference groups is displayed in the conference page; communication between participants in different conference groups can be supported; and the ways of communication of the participants during a group discussion can be enriched.

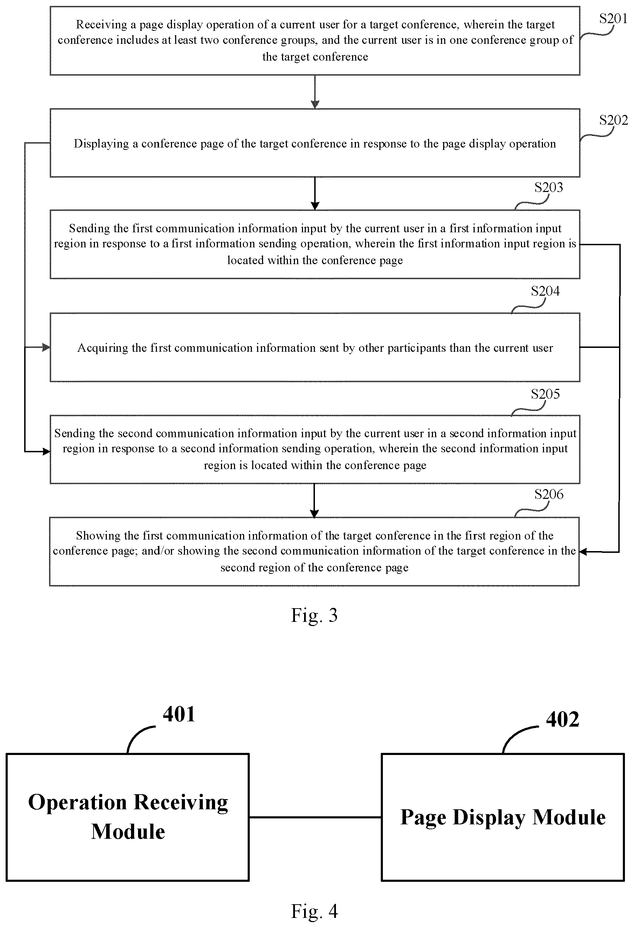

Fig. 3 is a flowchart of another conference page display method provided by an embodiment of the present disclosure. The solution in this embodiment may be combined with one or more optional solutions in the above embodiment. Optionally, showing the communication information of the target conference in the conference page includes at least one of: showing first communication information of the target conference in a first region of the conference page; and showing second communication information of the target conference in a second region of the conference page.

Optionally, before showing the communication information of the target conference in the conference page, the method further includes: in response to a first information sending operation, sending first communication information input by the current user in a first information input region, wherein the first information input region is located within the conference page.

Optionally, before showing the communication information of the target conference in the conference page, the method further includes: acquiring first communication information sent by other participants than the current user.

Optionally, before showing the communication information of the target conference in the conference page, the method further includes: in response to a second information sending operation, sending second communication information input by the current user in a second information input region, wherein the second information input region is located within the conference page.

Correspondingly, as shown in Fig. 3, the conference page display method provided in this embodiment may further include the following steps.

At S201, a page display operation of a current user for a target conference is received, wherein the target conference includes at least two conference groups, and the current user is in one conference group of the target conference.

At S202, in response to the page display operation, a conference page of the target conference is displayed, and at least one of S203, S204 or S205 is performed.

At S203, in response to a first information sending operation, the first communication information input by the current user in a first information input region is sent, and S206 is performed, wherein the first information input region is located within the conference page.

The first information sending operation may be a triggering operation indicative of sending the first communication information input by the current user in the first information input region, such as an operation of triggering a sending control for the first communication information, or an operation of triggering the key Enter on a target keyboard when an input indicator is located within the first information input region. The target keyboard may be a keyboard in communication connection with the current electronic device. The first information input region may be a region for the current user to input the first communication information in the conference page. The first communication information may be communication information sent by a participant in the target conference, e.g., communication information shown in the first region of the conference page.

Exemplarily, as shown in Fig. 2, the first information input region 26 may be set in the conference page of the target conference. Thus, the current user can input, in the first information input region 26, the first communication information the current user wants to send, and can perform the first information sending operation after the completion of the inputting. Correspondingly, when the current electronic device receives the first information sending operation performed by the current user, in response to the first information sending operation, the first communication information input in the first information input region 26 may be acquired, and the first communication information may be sent to electronic devices used by other participants or the first communication information may be sent to the electronic devices used by other participants by a server.

At S204, the first communication information sent by other participants than the current user is acquired, and S206 is performed.

In this embodiment, other participants than the current user may also send the first communication information in the target conference. Thus, when the current electronic device displays the conference page of the target conference, the first communication information sent by other participants than the current user can be acquired such that the first communication information sent by other participants is shown.

At S205, in response to a second information sending operation, the second communication information input by the current user in a second information input region is sent, wherein the second information input region is located within the conference page.

The second information sending operation may be a triggering operation indicative of sending the second communication information input by the current user in the second information input region, such as an operation of triggering a sending control for the second communication information, or an operation of triggering the key Enter on a target keyboard when an input indicator is located within the second information input region. The second information input region may be a region for the current user to input the second communication information in the conference page, which may be the same or different information input region as or from the first information input region. The second communication information may be communication information sent by a participant in the target conference, e.g., communication information shown in the second region of the conference page.

Exemplarily, as shown in Fig. 2, the second information input region 27 may be set in the conference page of the target conference. Thus, the current user can input, in the second information input region 27, the second communication information the current user wants to send, and can perform the second information sending operation after the completion of the inputting. Correspondingly, when the current electronic device receives the second information sending operation performed by the current user, in response to the second information sending operation, the second communication information input in the second information input region 27 may be acquired, and the second communication information may be sent to electronic devices used by other participants or the second communication information may be sent to the electronic devices used by other participants by a server.

It will be appreciated that in this embodiment, other participants than the current user may also send the second communication information in the target conference. Thus, when the current electronic device displays the conference page of the target conference, the second communication information sent by other participants than the current user can be acquired such that the second communication information sent by other participants is shown. In this case, optionally, before showing the communication information of the target conference in the conference page, the method further includes: acquiring the second communication information sent by other participants than the current user.

At S206, the first communication information of the target conference is shown in the first region of the conference page; and/or the second communication information of the target conference is shown in the second region of the conference page.

The first region may be a region for showing the first communication information of the target conference, and this region may be not only used for showing the first communication information sent by the participants in the conference group to which the current user belongs (including the current user and/or other participants than the current user in the conference group to which the current user belongs), but also used for showing the first communication information sent by the participants in the conference group to which the current user does not belong. The second region may be second for showing the second communication information of the target conference, and this region may be not only used for showing the second communication information sent by the participants in the conference group to which second current user belongs (including the current user and/or other participants than the current user in the conference group to which the current user belongs), but also used for showing the second communication information sent by the participants in the conference group to which the current user does not belong. The first region and the second region may have or not have an overlapping region.

The first communication information and the second communication information may be different communication information in the target conference. Exemplarily, the first communication information and the second communication information may be communication information sent by the participants of the target conference in different ways, e.g., communication information input and sent through different information input regions. For example, the first communication information may be communication information less related to a conference theme/conference agenda of the same target conference, e.g., chat information. The second communication information may be communication information highly related to the conference theme/conference agenda of the same target conference. Optionally, the first communication information is shown in a different manner from the second communication information. For example, the first communication information may be shown in the conference page in the form of bullet information/comment information, and the second communication information may be shown in the conference page in the form of comment information/bullet information. The first communication information and the second communication information are both visible to the participants in the target conference.

Exemplarily, after sending the first communication information input by the current user in the first information input region and/or after acquiring the first communication information sent by other participants than the current user in the target conference, the first communication information sent by the participants (including the current user and/or other participants than the current user in the target conference) of the target conference may be shown in the first region 24 of the conference page; and/or after sending the second communication information input by the current user in the second information input region and/or after acquiring the second communication information sent by other participants than the current user in the target conference, the second communication information sent by the participants (including the current user and/or other participants than the current user in the target conference) of the target conference may be shown in the second region 25 of the conference page, as shown in Fig. 2.

Moreover, as shown in Fig. 2, when displaying the second communication information sent by the participant of the target conference, the second region 25 may further show identification information and group information of the sender of the second communication information. The identification information may include, for example, an avatar and/or a nickname of the sender. The group information may include, for example, a name or a group number, etc. of the conference group to which the sender belongs.

In some implementations, the conference page may also include one or more other communication information showing regions than the first region and the second region. In this case, exemplarily, third communication information different from the first communication information and the second communication information may be shown in the other communication information showing regions. The third communication information may include, for example, intra-group communication information sent by the participants in the conference group to which the current user belongs, and the intra-group communication information may be visible only for the participants in this conference group (i.e., the conference group to which the senders of the intra-group communication information belong).

In some implementations, the conference page display method provided in this embodiment may be applied to a scenario of answering a question in groups in the conference. In this scenario, the second communication information may include answer information sent by the participants. That is, the second region may be used for showing the answer information sent by the participants. In this case, optionally, the second communication information includes answer information; and the showing the second communication information of the target conference in the second region of the conference region includes: showing, in a first showing style, the second communication information successfully matching a current answer in the second region of the conference page, and showing, in a second showing style, the second communication information failing to match the current answer in the second region, wherein the current answer is a preset answer of a current question in the target conference.

The target conference may be preset with one or more questions and answers corresponding to the questions. A current question may be a question for the participants to answer currently in the target conference, and may be switched by the moderator or automatically switched when the second communication information matching the current answer is present. The answer information may be construed as information of answering the current question, e.g., an answer to the current question input by a participant. The current answer may be construed as a preset answer of the current question, e.g., a preset correct answer to the current question. The first showing style and the second showing style may be two different showing styles for the second communication information. For example, the first showing style may be highlighting, and the second showing style may be non-highlighted displaying.

In the above implementations, when answering a question, the participants can answer the current question by sending the second communication information.

Thus, in the second region 25, the second communication information successfully matching the current answer (e.g., the second communication information 2 shown in Fig. 2) may be shown in the first showing style, and the second communication information failing to match the current answer (e.g., other second communication information than the second communication information 2 shown in Fig. 2) may be shown in the second showing style, so that the current can determine whether the answers input by the participants (including the current user) are correct. Here, the second communication information successfully matching the current answer may be construed as the second communication information being the correct answer to the current question; and the second communication information failing to match the current answer may be construed as the second communication information being not the correct answer to the current question.

In this embodiment, all the second communication information successfully matching the current answer can be shown in the first showing style. Optionally, the first piece of second communication information successfully matching the current answer may be shown only in the first showing style such that the current user determines the first participant who provides the correct answer to the current question.

For example, for the second communication information sent by each participant, if the second communication information is the first piece of second communication information hitting the current answer to the current question, the second communication information may be shown in the first showing style. If the second communication information is not the first piece of second communication information of the current answer hitting the current question or the second communication information does not hit the current answer to the current question, the second communication information may be shown in the second showing style.

In some implementations, the conference page display method provided in this embodiment further includes: updating score information of a target conference group, wherein the target conference group is a conference group to which a second participant belongs, and the second participant includes a first sender of the second communication information successfully matching the current answer.

The target conference group may be the conference group to which the second participant belongs. The second participant may include the first sender of the second communication information successfully matching the current answer, i.e., the first participant who provides the correct answer to the current question.

In the above implementations, when the second communication information successfully matching the current answer is present, the score information of the conference group to which the first sender of the second communication information successfully matching the current answer belongs may be further updated, e.g., increasing the total score of the conference group by a score corresponding to the current question.

In this embodiment, as shown in Fig. 2, the question information of the current question and/or the obtained information of each conference group may be further displayed in the conference page. For example, the question information of the current question may be shown in a third region 28 of the conference page, and/or the obtained information of each conference group in the target conference may be shown in a fourth region 29 of the conference page.

In this case, optionally, the conference page further includes the third region for showing the question information of the current question and/or the fourth region for showing the score information of each conference group.

The third region 28 may be a region for showing the question information of the current question in the conference page, which may have or not have an overlapping region with the first region and the second region. The fourth region may be a region for showing the score information of each conference group in the conference page, which may have or not have an overlapping region with the first region, the second region and the third region. The question information of the current question may be construed as the information of the current question, such as a question stem and/or an option of the current question. The score information of each conference group may include, for example, information such as the total score of each conference group at a current time.

The conference page display method provided in this embodiment can support inputting and sending different communication information by the participants, and can show the different communication information sent by the participants in different regions. The ways of sending and showing communication information can be further enriched.

Fig. 4 is a structural block diagram of a conference page display apparatus provided by an embodiment of the present disclosure. The apparatus may be implemented by software and/or hardware and may be configured in an electronic device, e.g., configured in a computer, a mobile phone, or a tablet computer, and can realize communication between the participants of different conference groups during a group discussion of the conference by performing the conference page display method. As shown in Fig. 4, a conference page display apparatus provided in this embodiment may include an operation receiving module 401 and a page display module 402.

The operation receiving module 401 is configured to receive a page display operation of a current user for a target conference, wherein the target conference includes at least two conference groups, and the current user is in one conference group of the target conference.

The page display module 402 is configured to, in response to the page display operation, display a conference page of the target conference, and show communication information of the target conference in the conference page, wherein the communication information is sent by a participant of the target conference; and the communication information is visible to each participant in the at least two conference groups.

The conference page display apparatus provided in this embodiment can: receive the page display operation of the current user for the target conference by means of the operation receiving module, wherein the target conference includes at least two conference groups, and the current user is in one conference group of the target conference; and by means of the page display module, in response to the page display operation, display the conference page of the target conference, and show the communication information of the target conference in the conference page, wherein the communication information is sent by the participants of the target conference; and the communication information is visible to each participant in the at least two conference groups. With the above technical solution of this embodiment, the communication information sent by the participants in different conference groups is displayed in the conference page; participants in different conference groups communicating with one another can be supported; and the ways of communication of the participants during a group discussion can be enriched.

Further, the conference page display apparatus provided in this embodiment may further include a voice playing module configured to play a voice signal of a first participant, wherein the first participant and the current user are in a same conference group.

In the above solution, the page display module 402 may be configured to perform at least one of: showing first communication information of the target conference in a first region of the conference page; and showing second communication information of the target conference in a second region of the conference page.

In the above solution, the first communication information may be shown in a different manner from the second communication information.

Further, the conference page display apparatus provided in this embodiment may further include a first sending module configured to, before showing the communication information of the target conference in the conference page, in response to a first information sending operation, send the first communication information input by the current user in a first information input region, wherein the first information input region is located within the conference page.

Further, the conference page display apparatus provided in this embodiment may further include an information acquisition module configured to, before showing the communication information of the target conference in the conference page, acquire the first communication information sent by other participants than the current user.

Further, the conference page display apparatus provided in this embodiment may further include a second sending module configured to, before showing the communication information of the target conference in the conference page, in response to a second information sending operation, send the second communication information input by the current user in a second information input region, wherein the second information input region is located within the conference page.

In the above solution, the second communication information may include answer information; and the page display module 402 may be configured to: show, in a first showing style, the second communication information successfully matching a current answer in the second region of the conference page, and show, in a second showing style, the second communication information failing to match the current answer in the second region, wherein the current answer is a preset answer of a current question in the target conference.

Further, the conference page display apparatus provided in this embodiment may further include an updating module configured to update score information of a target conference group, wherein the target conference group is a conference group to which a second participant belongs, and the second participant includes a first sender of the second communication information successfully matching the current answer.

In the above solution, the conference page may further include a third region for showing question information of the current question and/or a fourth region for showing score information of each conference group.

The conference page display apparatus provided in the embodiments of the present disclosure may perform the conference page display method provided in any embodiment of the present disclosure, and has corresponding functional modules for performing the conference page display method and beneficial effects. For technical details not described in detail in this embodiment, a reference may be made to the conference page display method provided in any embodiment of the present disclosure.

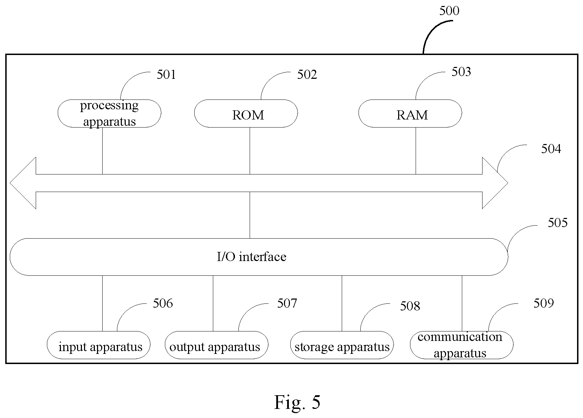

Fig. 5 is specifically referred below, and it shows the structure schematic diagram suitable for achieving the electronic device 500 (e.g. a computer or a terminal device) in the embodiment of the present disclosure. The terminal device in the embodiment of the present disclosure may include but not be limited to a mobile terminal such as a mobile phone, a notebook computer, a digital broadcasting receiver, a personal digital assistant (PDA), a PAD (tablet computer), a portable multimedia player (PMP), a vehicle terminal (such as a vehicle navigation terminal), and a fixed terminal such as a digital television (TV) and a desktop computer. The electronic device shown in Fig. 5 is only an example and should not impose any limitations on the functions and use scopes of the embodiments of the present disclosure.

As shown in Fig. 5, the electronic device 500 may include a processing apparatus (such as a central processing unit, and a graphics processor) 501, it may execute various appropriate actions and processes according to a program stored in a read-only memory (ROM) 502 or a program loaded from a storage apparatus 508 to a random access memory (RAM) 503. In RAM 503, various programs and data required for operations of the electronic device 500 are also stored. The processing apparatus 501, ROM 502, and RAM 503 are connected to each other by a bus 504. An input/output (I/O) interface 505 is also connected to the bus 504.

Typically, the following apparatuses may be connected to the I/O interface 505: an input apparatus 506 such as a touch screen, a touchpad, a keyboard, a mouse, a camera, a microphone, an accelerometer, and a gyroscope; an output apparatus 507 such as a liquid crystal display (LCD), a loudspeaker, and a vibrator; a storage apparatus 508 such as a magnetic tape, and a hard disk drive; and a communication apparatus 509. The communication apparatus 509 may allow the electronic device 500 to wireless-communicate or wire-communicate with other devices so as to exchange data. Although Fig. 5 shows the electronic device 500 with various apparatuses, it should be understood that it is not required to implement or possess all the apparatuses shown. Alternatively, it may implement or possess the more or less apparatuses.

Specifically, according to the embodiment of the present disclosure, the process described above with reference to the flow diagram may be achieved as a computer software program. For example, an embodiment of the present disclosure includes a computer program product, it includes a computer program loaded on a non-transient computer-readable medium, and the computer program contains a program code for executing the method shown in the flow diagram. In such an embodiment, the computer program may be downloaded and installed from the network by the communication apparatus 509, or installed from the storage apparatus 508, or installed from ROM 502. When the computer program is executed by the processing apparatus 501, the above functions defined in the method in the embodiments of the present disclosure are executed.

It should be noted that the above computer-readable medium in the present disclosure may be a computer-readable signal medium, a computer-readable storage medium, or any combinations of the two. The computer-readable storage medium may be, for example, but not limited to, a system, an apparatus or a device of electricity, magnetism, light, electromagnetism, infrared, or semiconductor, or any combinations of the above. More specific examples of the computer-readable storage medium may include but not be limited to: an electric connector with one or more wires, a portable computer magnetic disk, a hard disk drive, a random access memory (RAM), a read-only memory (ROM), an erasable programmable read-only memory (EPROM or flash memory), an optical fiber, a portable compact disk read-only memory (CD-ROM), an optical storage device, a magnetic storage device or any suitable combinations of the above. In the present disclosure, the computer-readable storage medium may be any visible medium that contains or stores a program, and the program may be used by an instruction executive system, apparatus or device or used in combination with it. In the present disclosure, the computer-readable signal medium may include a data signal propagated in a baseband or as a part of a carrier wave, it carries the computer-readable program code. The data signal propagated in this way may adopt various forms, including but not limited to an electromagnetic signal, an optical signal, or any suitable combinations of the above. The computer-readable signal medium may also be any computer-readable medium other than the computer-readable storage medium, and the computer-readable signal medium may send, propagate, or transmit the program used by the instruction executive system, apparatus or device or in combination with it. The program code contained on the computer-readable medium may be transmitted by using any suitable medium, including but not limited to: a wire, an optical cable, a radio frequency (RF) or the like, or any suitable combinations of the above.

In some implementation modes, a client and a server may be communicated by using any currently known or future-developed network protocols such as a HyperText Transfer Protocol (HTTP), and may interconnect with any form or medium of digital data communication (such as a communication network). Examples of the communication network include a local area network ("LAN"), a wide area network ("WAN"), an internet work (such as the Internet), and an end-to-end network (such as an ad hoc end-to-end network), as well as any currently known or future-developed networks.

The above-mentioned computer-readable medium may be included in the above-mentioned electronic device, or may also exist alone without being assembled into the electronic device.

The above-mentioned computer-readable medium carries one or more programs, and when the one or more programs are executed by the electronic device, the electronic device is caused to: receive a page display operation of a current user for a target conference, wherein the target conference comprises at least two conference groups, and the current user is in one conference group of the target conference; and in response to the page display operation, display a conference page of the target conference, and show communication information of the target conference in the conference page, wherein the communication information is sent by a participant of the target conference; and the communication information is visible to each participant in the at least two conference groups.

The computer program code for executing the operation of the present disclosure may be written in one or more programming languages or combinations thereof, the above programming language includes but is not limited to object-oriented programming languages such as Java, Smalltalk, and C++, and also includes conventional procedural programming languages such as a "C" language or a similar programming language. The program code may be completely executed on the user's computer, partially executed on the user's computer, executed as a standalone software package, partially executed on the user's computer and partially executed on a remote computer, or completely executed on the remote computer or server. In the case involving the remote computer, the remote computer may be connected to the user's computer by any types of networks, including LAN or WAN, or may be connected to an external computer (such as connected by using an internet service provider through the Internet).

The flow diagrams and the block diagrams in the drawings show possibly achieved system architectures, functions, and operations of systems, methods, and computer program products according to various embodiments of the present disclosure. At this point, each box in the flow diagram or the block diagram may represent a module, a program segment, or a part of a code, the module, the program segment, or a part of the code contains one or more executable instructions for achieving the specified logical functions. It should also be noted that in some alternative implementations, the function indicated in the box may also occur in a different order from those indicated in the drawings. For example, two consecutively represented boxes may actually be executed basically in parallel, and sometimes it may also be executed in an opposite order, this depends on the function involved. It should also be noted that each box in the block diagram and/or the flow diagram, as well as combinations of the boxes in the block diagram and/or the flow diagram, may be achieved by using a dedicated hardware-based system that performs the specified function or operation, or may be achieved by using combinations of dedicated hardware and computer instructions.

The involved units described in the embodiments of the present disclosure may be achieved by a mode of software, or may be achieved by a mode of hardware. Herein, the name of the unit does not constitute a limitation for the unit itself in some cases.

The functions described above in this article may be at least partially executed by one or more hardware logic components. For example, non-limiting exemplary types of the hardware logic component that may be used include: a field programmable gate array (FPGA), an application specific integrated circuit (ASIC), an application specific standard product (ASSP), a system on chip (SOC), a complex programmable logic device (CPLD) and the like.

In the context of the present disclosure, the machine-readable medium may be a visible medium, and it may contain or store a program for use by or in combination with an instruction executive system, apparatus, or device. The machine-readable medium may be a machine-readable signal medium or a machine-readable storage medium. The machine-readable medium may include but not limited to an electronic, magnetic, optical, electromagnetic, infrared, or semiconductor system, apparatus, or device, or any suitable combinations of the above. More specific examples of the machine-readable storage medium may include an electric connector based on one or more wires, a portable computer disk, a hard disk drive, RAM, ROM, EPROM (or a flash memory), an optical fiber, CD-ROM, an optical storage device, a magnetic storage device, or any suitable combinations of the above.

According to one or more embodiments of the present disclosure, example 1 provides a conference page display method, comprising: receiving a page display operation of a current user for a target conference, wherein the target conference comprises at least two conference groups, and the current user is in one conference group of the target conference; and in response to the page display operation, displaying a conference page of the target conference, and showing communication information of the target conference in the conference page, wherein the communication information is sent by a participant of the target conference; and the communication information is visible to each participant in the at least two conference groups.

According to one or more embodiments of the present disclosure, example 2 provides a method based on example 1 further comprising: playing a voice signal of a first participant, wherein the first participant and the current user are in a same conference group.

According to one or more embodiments of the present disclosure, example 3 provides a method based on example 1, wherein the showing communication information of the target conference in the conference page comprises at least one of: showing first communication information of the target conference in a first region of the conference page; and showing second communication information of the target conference in a second region of the conference page.

According to one or more embodiments of the present disclosure, example 4 provides a method based on example 3, wherein the first communication information is shown in a different manner from the second communication information.

According to one or more embodiments of the present disclosure, example 5 provides a method based on example 3, before the showing communication information of the target conference in the conference page, further comprising: in response to a first information sending operation, sending first communication information input by the current user in a first information input region, wherein the first information input region is within the conference page.

According to one or more embodiments of the present disclosure, example 6 provides a method based on example 3, before the showing communication information of the target conference in the conference page, further comprising: acquiring first communication information sent by other participants than the current user.

According to one or more embodiments of the present disclosure, example 7 provides a method based on example 3, before the showing communication information of the target conference in the conference page, further comprising: in response to a second information sending operation, sending the second communication information input by the current user in a second information input region, wherein the second information input region is within the conference page.

According to one or more embodiments of the present disclosure, example 8 provides a method based on example 3, wherein the second communication information comprises answer information; and the showing second communication information of the target conference in a second region of the conference page comprises: showing, in a first showing style, second communication information successfully matching a current answer in the second region of the conference page, and showing, in a second showing style, second communication information failing to match the current answer in the second region, wherein the current answer is a preset answer of a current question in the target conference.

According to one or more embodiments of the present disclosure, example 9 provides a method based on example 8, further comprising: updating score information of a target conference group, wherein the target conference group is a conference group to which a second participant belongs, and the second participant comprises a first sender of the second communication information successfully matching the current answer.

According to one or more embodiments of the present disclosure, example 10 provides a method based on example 8 or 9, wherein the conference page further comprises a third region for showing question information of the current question and/or a fourth region for showing score information of each conference group.

According to one or more embodiments of the present disclosure, example 11 provides a conference page display apparatus, comprising: an operation receiving module configured to receive a page display operation of a current user for a target conference, wherein the target conference comprises at least two conference groups, and the current user is in one conference group of the target conference; and a page display module configured to, in response to the page display operation, display a conference page of the target conference, and show communication information of the target conference in the conference page, wherein the communication information is sent by a participant of the target conference; and the communication information is visible to each participant in the at least two conference groups.

According to one or more embodiments of the present disclosure, example 12 provides an electronic device, comprising: one or more processors; and a memory for storing one or more programs, which when executed by the one or more processors, enable the one or more processors to implement the conference page display method according to any one of the examples 1-10.

According to one or more embodiments of the present disclosure, example 13 provides a computer-readable storage medium, storing computer instructions which, when executed by a processor, cause the conference page display method according to any one of the examples 1-10.

The foregoing are merely descriptions of the preferred embodiments of the present disclosure and the explanations of the technical principles involved. It will be appreciated by those skilled in the art that the scope of the disclosure involved herein is not limited to the technical solutions formed by a specific combination of the technical features described above, and shall cover other technical solutions formed by any combination of the technical features described above or equivalent features thereof without departing from the concept of the present disclosure. For example, the technical features described above may be mutually replaced with the technical features having similar functions disclosed herein (but not limited thereto) to form new technical solutions.

In addition, while operations have been described in a particular order, it shall not be construed as requiring that such operations are performed in the stated specific order or sequence. Under certain circumstances, multitasking and parallel processing may be advantageous. Similarly, while some specific implementation details are included in the above discussions, these shall not be construed as limitations to the present disclosure. Some features described in the context of a separate embodiment may also be combined in a single embodiment. Rather, various features described in the context of a single embodiment may also be implemented separately or in any appropriate sub-combination in a plurality of embodiments.

Although the present subject matter has been described in a language specific to structural features and/or logical method acts, it will be appreciated that the subject matter defined in the appended claims is not necessarily limited to the particular features and acts described above. Rather, the particular features and acts described above are merely exemplary forms for implementing the claims.

## Claims

1. A conference page display method, comprising:
receiving a page display operation of a current user for a target conference, wherein the target conference comprises at least two conference groups, and the current user is in one conference group of the target conference; and
in response to the page display operation, displaying a conference page of the target conference, and showing communication information of the target conference in the conference page, wherein the communication information is sent by a participant of the target conference; and the communication information is visible to each participant in the at least two conference groups.

2. The method according to claim 1, further comprising:
playing a voice signal of a first participant, wherein the first participant and the current user are in a same conference group.

3. The method according to claim 1 or 2, wherein the showing communication information of the target conference in the conference page comprises at least one of:
showing first communication information of the target conference in a first region of the conference page; and
showing second communication information of the target conference in a second region of the conference page.

4. The method according to claim 3, wherein the first communication information is shown in a different manner from the second communication information.

5. The method according to claim 3 or 4, before the showing communication information of the target conference in the conference page, further comprising:
in response to a first information sending operation, sending first communication information input by the current user in a first information input region, wherein the first information input region is within the conference page.

6. The method according to any one of claims 3 to 5, before the showing communication information of the target conference in the conference page, further comprising:
acquiring first communication information sent by other participants than the current user.

7. The method according to any one of claims 3 to 6, before the showing communication information of the target conference in the conference page, further comprising:
in response to a second information sending operation, sending the second communication information input by the current user in a second information input region, wherein the second information input region is within the conference page.

8. The method according to any one of claims 3 to 7, wherein the second communication information comprises answer information; and the showing second communication information of the target conference in a second region of the conference page comprises:
showing, in a first showing style, second communication information successfully matching a current answer in the second region of the conference page, and showing, in a second showing style, second communication information failing to match the current answer in the second region, wherein the current answer is a preset answer of a current question in the target conference.

9. The method according to claim 8, further comprising:
updating score information of a target conference group, wherein the target conference group is a conference group to which a second participant belongs, and the second participant comprises a first sender of the second communication information successfully matching the current answer.

10. The method according to claim 8 or 9, wherein the conference page further comprises a third region for showing question information of the current question and/or a fourth region for showing score information of each conference group.

11. A conference page display apparatus, comprising:
an operation receiving module configured to receive a page display operation of a current user for a target conference, wherein the target conference comprises at least two conference groups, and the current user is in one conference group of the target conference; and
a page display module configured to, in response to the page display operation, display a conference page of the target conference, and show communication information of the target conference in the conference page, wherein the communication information is sent by a participant of the target conference; and the communication information is visible to each participant in the at least two conference groups.

12. An electronic device, comprising:
at least one processor; and
a memory in communication connection with the at least one processor, wherein:
the memory stores a computer program executable by the at least one processor; and the computer program is executed by the at least one processor to enable the at least one processor to perform the conference page display method according to any one of claims 1 to 10.

13. A computer-readable storage medium, storing computer instructions which, when executed by a processor, cause the conference page display method according to any one of claims 1 to 10 to be implemented.
